# EUROPÄISCHE PATENTSCHRIFT

(11) **EP 1 162 881 B1**
(45) Veröffentlichungstag und Bekanntmachung des Hinweises auf die Patenterteilung: **14.04.2004**
(21) Anmeldenummer: 00916844.4
(22) Anmeldetag: 18.02.2000
(51) Int. Cl.: A01N 25/02

(54) **PIT-EMULSIONEN**
PIT EMULSIONS
EMULSIONS PIT

(30) Priorität: 27.02.1999 DE 19908559
(43) Veröffentlichungstag der Anmeldung: 19.12.2001
(73) Patentinhaber: Cognis Deutschland GmbH & Co. KG, 40589 Düsseldorf (DE)
(72) Erfinder: ABRIBAT, Benoit, F-91490 Dannemois (FR); DA SILVA MARQUES, Maria, F-77000 Vaux le Penil (FR)
(86) Internationale Anmeldenummer: PCT/EP2000/001311
(87) Internationale Veröffentlichungsnummer: WO 2000/051427

(56) Entgegenhaltungen:
- EP-A- 0 589 334
- WO-A-93/14630
- WO-A-98/09721
- WO-A-98/32413
- DE-A- 4 337 041

## Beschreibung

Die Erfindung befindet sich auf dem Gebiet der Pestizidformulierungen und betrifft spezielle PIT-Emulsionen mit Pestiziden und ausgewählten Emulgatoren.

### Stand der Technik

Zum Schutz der wertvollen Kulturpflanzen vor Schädlingsbefall werden in der Landschaft vielfach Emulsionen öllöslicher Pestizide eingesetzt. Diese Zubereitungen sind jedoch nicht ausreichend lagerstabil und erlauben insbesondere weder die Herstellung von Verdünnungen noch die Zugabe von wasserlöslichen Pestiziden, ohne daß es zu einem Bruch der Emulsion kommt. Ein weiteres Problem besteht darin, daß die Aktivität der Emulsionen nicht immer zufriedenstellend ist.

Demzufolge hat die komplexe Aufgabe der vorliegenden Erfindung darin bestanden, neue Pflanzenschutzmittel mit festen wie flüssigen, vorzugsweise öllöslichen Pestiziden zur Verfügung zu stellen, die sich gleichzeitig durch eine höhere Lagerstabilität und Aktivität auszeichnen und sich dabei insbesondere sowohl problemlos mit Wasser verdünnen lassen als auch die stabile Einarbeitung zusätzlicher wasserlöslicher Pestizide erlauben.

Stabile pestizide Zusammensetzungen, die anionische Tenside enthalten, sind aus EP 0 589 334 bekannt.

### Beschreibung der Erfindung

Gegenstand der Erfindung sind PIT-Emulsionen, enthaltend
(a) Pestizide und
(b) nichtionische Emulgatoren.

Überraschenderweise wurde gefunden, daß Emulsionen, die Pestizide zusammen mit nichtionischen Emulgatoren, insbesondere Kombinationen von Fettalkoholethoxylaten und Fettsäurepartialglyceriden, enthalten und nach der Phaseninversionstemperatur-Methode hergestellt worden sind ("PIT-Emulsionen") das komplexe Anforderungsprofil in ausgezeichneter Weise erfüllen. Die Zubereitungen zeichnen sich durch eine gegenüber konventionellen Emulsionen des Stands der Technik verbesserte Lagerstabilität und höhere Aktivität aus. Sie lassen sich zudem problemlos mit Wasser verdünnen und erlauben zudem auch die nachträgliche Einarbeitung wasserlöslicher Pestizide.

### Pestizide

Bei den Pestiziden, die als Komponente (a) in Frage kommen, handelt es sich vorzugsweise um öllösliche Substanzen. Es können dabei Fungizide, Herbizide, Insektizide oder deren Gemische zum Einsatz gelangen. Typische Beispiele für geeignete **Fungizide** sind Azoxystrobin, Benalaxyl, Carbendazim, Chlorothalonil, Cupfer, Cymoxanil, Cyproconazol, Diphenoconazol, Dinocap, Epoxiconazol, Fluazinam, Flusilazol, Flutriafol, Folpel, Fosetyl-Aluminium, Kresoxim-Methyl, Hexaconazol, Mancozeb, Metalaxyl, Metconazol, Myclobutanil, Ofurace, Phentinhydroxid, Prochloraz, Pyremethanil, Soufre, Tebucanazol, und Tetraconazol sowie deren Gemische. Als **Herbizide** können Alachlor, Acloniphen, Acetochlor, Amidosulfuron, Aminotriazol, Atrazin, Bentazon, Biphenox, Bromoxyl Octanoate, Bromoxynil, Clethodim, Chlodinafop-Propargyl, Chloridazon, Chlorsulfuron, Chlortoluron, Clomazon, Cycloxydim, Desmedipham, Dicamba, Dicyclofop-Methyl, Dihamstoff, Difluphenicanil, Dimithenamid, Ethofumesat, Fluazifop, Fluazifop-p-butyl, Fluorochloridon, Fluroxypyr, Glufonsinat, Glyphosat, Haloxyfop-R, loxynil Octanoate, Isoproturon, Isoxaben, Metamitron, Metazachlor, Metolachlor, Metsulfuron-Methyl, Nicosulfuron, Notflurazon, Oryzalin, Oxadiazon, Oxyfluorphen, Paraquat, Pendimethalin, Phenmedipham, Phenoxyprop-p-Ethyl, Propaquizafop, Prosulfocarb, Quizalofop, Sulcotrion, Sulphosat, Terbutylazin, Triasulfuron, Trichlorpyr, Triflualin und Triflusulforon-Methyl einzeln oder in Abmischung eingesetzt werden. Als **Insektzide** kommen schließlich Biphenthrin, Carbofuran, Carbosulfan, Chlorpyriphos-Methyl, Chlorpyriphos-Ethyl, β-Cyfluthrin, λ-Cyhalothrin, Cyhexatin, Cypermethrin, Dicofol, Endosulfan, τ-Fluvalinat, α-Methrin, δ-Methrin, Phenbutatin, Pyrimicarb, Terbuphos und Tebuphenpyrad sowie deren Gemische in Betracht. Weitere geeignete Pestizide können beispielsweise dem Index **Phytosanitaire 1998, 34. Aufl.** (Hrsg.: Association de Coordination Technique Agricole, Paris) entnommen werden.

### Nichtionische Emulgatoren

Als Emulgatoren, die die Komponente (b) bilden, kommen beispielsweise nichtionogene Tenside aus mindestens einer der folgenden Gruppen in Frage:
(1) Anlagerungsprodukte von 2 bis 30 Mol Ethylenoxid und/ oder 0 bis 5 Mol Propylenoxid an lineare Fettalkohole mit 8 bis 22 C-Atomen, an Fettsäuren mit 12 bis 22 C-Atomen und an Alkylphenole mit 8 bis 15 C-Atomen in der Alkylgruppe;
(2) C_{12/18}-Fettsäuremono- und -diester von Anlagerungsprodukten von 1 bis 30 Mol Ethylenoxid an Glycerin;
(3) Glycerinmono- und -diester und Sorbitanmono- und -diester von gesättigten und ungesättigten Fettsäuren mit 6 bis 22 Kohlenstoffatomen und deren Ethylenoxidanlagerungsprodukte;
(4) Alkylmono- und -oligoglycoside mit 8 bis 22 Kohlenstoffatomen im Alkylrest und deren ethoxylierte Analoga;
(5) Anlagerungsprodukte von 15 bis 60 Mol Ethylenoxid an Ricinusöl und/oder gehärtetes Ricinusöl;
(6) Polyol- und insbesondere Polyglycerinester wie z.B. Polyglycerinpolyricinoleat oder Polyglyce-rinpoly-12-hydroxystearat. Ebenfalls geeignet sind Gemische von Verbindungen aus mehreren dieser Substanzklassen;
(7) Anlagerungsprodukte von 2 bis 15 Mol Ethylenoxid an Ricinusöl und/oder gehärtetes Ricinusöl;
(8) Partialester auf Basis linearer, verzweigter, ungesättigter bzw. gesättigter C_{6/22}-Fettsäuren, Ricinolsäure sowie 12-Hydroxystearinsäure und Glycerin, Polyglycerin, Pentaerythrit, Dipentaerythrit, Zuckeralkohole (z.B. Sorbit), Alkylglucoside (z.B. Methylglucosid, Butylglucosid, Lauryl-glucosid) sowie Polyglucoside (z.B. Cellulose);
(9) Trialkylphosphate sowie Mono-, Di- und/oder Tri-PEG-alkylphosphate;
(10) Wollwachsalkohole;
(11) Polysiloxan-Polyalkyl-Polyether-Copolymere bzw. entsprechende Derivate;
(12) Mischester aus Pentaerythrit, Fettsäuren, Citronensäure und Fettalkohol gemäß **DE-PS 1165574** und/oder Mischester von Fettsäuren mit 6 bis 22 Kohlenstoffatomen, Methylglucose und Polyolen, vorzugsweise Glycerin,
(13) Polyalkylenglycole sowie
(14) Glycerincarbonat.

Die Anlagerungsprodukte von Ethylenoxid und/oder von Propylenoxid an Fettalkohole, Fettsäuren, Alkylphenole, Glycerinmono- und -diester sowie Sorbitanmono- und -diester von Fettsäuren oder an Ricinusöl stellen bekannte, im Handel erhältliche Produkte dar. Es handelt sich dabei um Homologengemische, deren mittlerer Alkoxylierungsgrad dem Verhältnis der Stoffmengen von Ethylenoxid und/ oder Propylenoxid und Substrat, mit denen die Anlagerungsreaktion durchgeführt wird, entspricht. C_{12/18}-Fettsäuremono- und -diester von Anlagerungsprodukten von Ethylenoxid an Glycerin sind aus **DE-PS 2024051** als Rückfettungsmittel für kosmetische Zubereitungen bekannt. C_{8/18}-Alkylmono- und -oligoglycoside, ihre Herstellung und ihre Verwendung als oberflächenaktive Stoffe sind beispielsweise aus **US 3,839,318, US 3,707,535, US 3,547,828, DE-OS 1943689, DE-OS 2036472** und **DE-A1 3001064** sowie **EP-A1 0077167** bekannt. Ihre Herstellung erfolgt insbesondere durch Umsetzung von Glucose oder Oligosacchariden mit primären Alkoholen mit 8 bis 18 C-Atomen. Bezüglich des Glycosidrestes gilt, daß sowohl Monoglycoside, bei denen ein cyclischer Zuckerrest glycosidisch an den Fettalkohol gebunden ist, als auch oligomere Glycoside mit einem Oligomerisationsgrad bis vorzugsweise etwa 8 geeignet sind. Der Oligomerisierungsgrad ist dabei ein statistischer Mittelwert, dem eine für solche technischen Produkte übliche Homologenverteilung zugrunde liegt.

In einer bevorzugten Ausführungsform der Erfindung werden Mischungen von mindestens zwei nichtionischen Emulgatoren eingesetzt, bei denen es sich insbesondere um (b1) Fettalkoholethoxylate und (b2) Fettsäurepartialglyceride handelt. Die **Fettalkoholethoxylate** (Komponente b1) folgen dabei vorzugsweise der Formel (I),

**R**^{**1**}**O(CH**_{**2**}**CH**_{**2**}**O)**_{**n**}**H** (I)

in der R¹ für einen linearen oder verzweigten Alkyl- und/oder Alkenylrest mit 12 bis 24, insbesondere 16 bis 22 Kohlenstoffatomen und n für Zahlen von 1 bis 30, insbesondere 10 bis 20 steht. Typische Beispiele sind die Anlagerungsprodukte von durchschnittlich 10 bis 20 Mol Ethylenoxid an Cetylalkohol, Stearylalkohol, Isostearylalkohol, Cetearylalkohol und Behenylalkohol. Die Fettsäurepartialglyceride, also Monoglyceride, Diglyceride und deren technische Gemische, die noch herstellungsbedingt geringe Mengen Triglyceride enthalten können und die die Unterkomponente (b2) bilden, folgen in der Regel Formel (II), 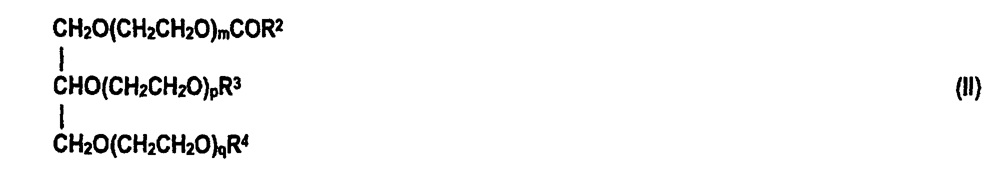 in der R²CO für einen linearen oder verzweigten, gesättigten und/oder ungesättigten Acylrest mit 6 bis 22, vorzugsweise 12 bis 18 Kohlenstoffatomen, R³ und R⁴ unabhängig voneinander für R²CO oder OH und die Summe (m+p+q) für 0 oder Zahlen von 1 bis 100, vorzugsweise 5 bis 25 steht, mit der Maßgabe, daß mindestens einer der beiden Reste R³ und R⁴ OH bedeutet. Typische Beispiele sind Mono- und/oder Diglyceride auf Basis von Capronsäure, Caprylsäure, 2-Ethylhexansäure, Caprinsäure, Lau-rinsäure, Isotridecansäure, Myristinsäure, Palmitinsäure, Palmoleinsäure, Stearinsäure, Isostearinsäu-re, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Vorzugsweise werden technische Laurinsäureglyceride, Palmitinsäureglyceride, Stearinsäureglyceride, Isostearinsäureglyceride, Ölsäureglyceride, Behensäureglyceride und/oder Erucasäureglyceride eingesetzt, welche einen Monoglyceridanteil im Bereich von 50 bis 95, vorzugsweise 60 bis 90 Gew.-% aufweisen. Das Einsatzverhältnis von Fettalkoholethoxylaten und Fettsäurepartialglyceriden ist in weiten Grenzen unkritisch und kann 90 : 10 bis 10 : 90, vorzugsweise 75 : 25 bis 25 : 75 und insbesondere 60 : 40 bis 40 : 60 Gewichtsteile betragen:

### Lösemittel

Insbesondere dann, wenn Pestizide in die Emulsionen eingearbeitet werden sollen, die bei Raumtemperatur Feststoffe darstellen, empfiehlt es sich, unpolare Lösemittel mitzuverwenden. Als optionale Komponente (c) kommen hierfür beispielsweise Mineralöle, Fettsäureniedrigalkylester, wie z.B. die C₁-C₄-, d.h. die Methyl-, Ethyl-, Propyl- und/oder Butylester von Capronsäure, Caprylsäure, 2-Ethylhexan-säure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen in Frage. Des weiteren geeignet sind pflanzliche Triglyceride, wie beispielsweise Kokosöl, Palmöl, Palmkernöl, Sonnenblumenöl, Olivenöl und dergleichen.

### PIT-Emulsionen

In einer bevorzugten Ausführungsform enthalten die erfindungsgemäßen PIT-Emulsionen
(a) 1 bis 20, vorzugsweise 5 bis 15 Gew.-% Pestizide,
(b) 5 bis 15, vorzugsweise 8 bis 12 Gew.-% nichtionische Emulgatoren und
(c) 0 bis 40, vorzugsweise 5 bis 30 Gew.-% Lösemittel,
mit der Maßgabe, daß sich die Mengenangaben mit Wasser und gegebenenfalls weiteren üblichen Hilfs- und Zusatzstoffen zu 100 Gew.-% ergänzen. Der Wassergehalt der Emulsionen liegt bei durchschnittlich 30 bis 90 und insbesondere 40 bis 60 Gew.-%, die Tröpfchengröße bei 0,01 bis 1, vorzugsweise 0,1 bis 0,5 µm.

Ein weiterer Gegenstand der Erfindung betrifft ein Verfahren zur Herstellung von Pestizidemulsionen, bei dem man die öllöslichen Pestizide zusammen mit den nichtionischen Emulgatoren und 40 bis 60 Gew.-% - bezogen auf die Endformulierung - Wasser homogenisiert, bis über die Phaseninversionstemperatur erhitzt, die restliche Menge Wasser zusetzt, die Emulsion abkühlen läßt und dann gegebenenfalls mit einer weiteren Menge Wasser auf die Anwendungskonzentration verdünnt undloder weitere wasserlösliche Pestizide zusetzt.

### Beispiele

Es wurden Pflanzenschutzemulsionen unter Einsatz von bei Raumtemperatur flüssigen bzw. festen Pestiziden untersucht. Die erfindungsgemäßen Emulsionen 1 bis 3 wurden nach dem PIT-Verfahren hergestellt, die Vergleichsemulsionen V1 und V2 nach konventionellem Heißverfahren. Die Emulsionen wurden anschließend 1 Woche bei 20°C bzw. 4 Wochen bei 40°C gelagert und auf ihre Stabilität untersucht; dabei bedeutet (++) stabil, (+) leichte Trübung und (-) Phasentrennung. Des weiteren wurden die Emulsionen nach der Herstellung bei 20°C mit Wasser bis auf einen Aktivsubstanzgehalt von 1 Gew.-% verdünnt und die Stabilität in gleicher Weise beurteilt. Die Ergebnisse sind in Tabelle 1 zusammengefaßt.

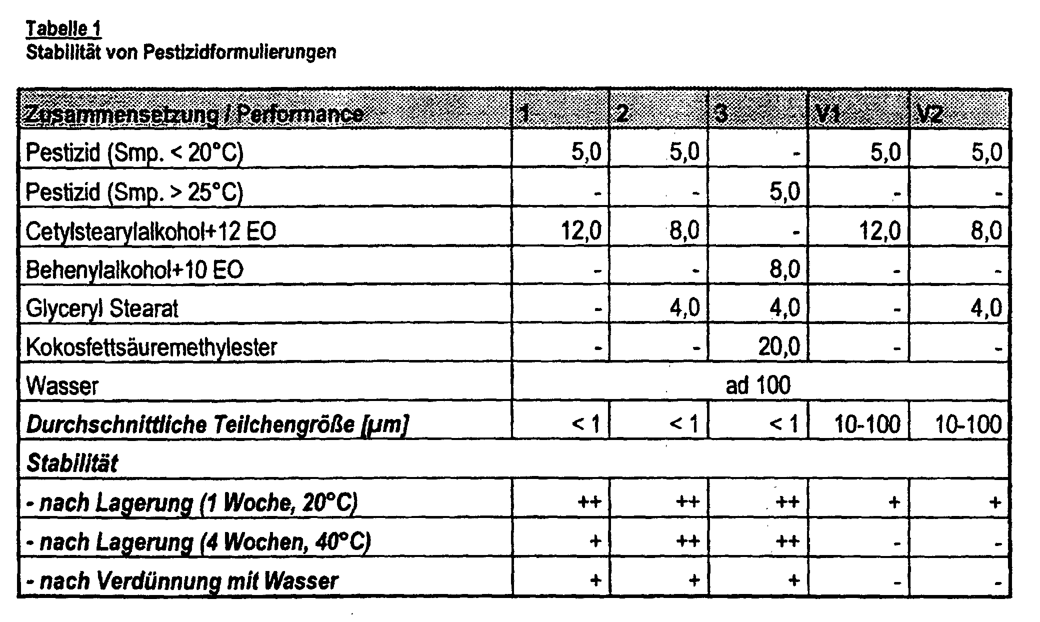

Die erfindungsgemäßen PIT-Emulsionen erwiesen sich sowohl bei Temperaturlagerung als auch bei Verdünnung als stabil, während die Vergleichsemulsionen weder Temperaturstress noch die Zugabe von Wasser erlaubten.

## Patentansprüche

1. PIT-Emulsionen, enthaltend
(a) 1 bis 20 Gew.-% Pestizide,
(b) 5 bis 15 Gew.-% nichtionische Emulgatoren und
(c) 0 bis 40 Gew.-% Lösemittel
mit der Maßgabe, dass sich die Mengenangaben mit Wasser zu 100 Gew.-% ergänzen.

2. PIT-Emulsionen nach Anspruch 1, **dadurch gekennzeichnet, daß** sie als Komponente (a) öllösliche Pestizide enthalten.

3. PIT-Emulsionen nach den Ansprüchen 1 und/oder 2, **dadurch gekennzeichnet, daß** sie als Komponente (a) Fungizide, Herbizide, Insektizide oder deren Gemische enthalten.

4. PIT-Emulsionen nach mindestens einem der Ansprüche 1 bis 3, **dadurch gekennzeichnet, daß** sie als Komponente (b) nichtionische Emulgatoren enthalten, die ausgewählt sind aus der Gruppe, die gebildet wird von Anlagerungsprodukten von 2 bis 30 Mol Ethylenoxid und/ oder 0 bis 5 Mol Propylenoxid an lineare Fettalkohole mit 8 bis 22 C-Atomen, an Fettsäuren mit 12 bis 22 C-Atomen und an Alkylphenole mit 8 bis 15 C-Atomen in der Alkylgruppe; C_{12/18}-Fettsäuremono- und -diestem von Anlagerungsprodukten von 1 bis 30 Mol Ethylenoxid an Glycerin; Glycerinmono- und -diestern und Sorbitanmono- und -diester von gesättigten und ungesättigten Fettsäuren mit 6 bis 22 Kohlenstoffatomen und deren Ethylenoxidanlagerungsprodukten; Alkylmono- und -oligoglyco-siden mit 8 bis 22 Kohlenstoffatomen im Alkylrest und deren ethoxylierte Analoga; Anlagerungsprodukten von 15 bis 60 Mol Ethylenoxid an Ricinusöl und/oder gehärtetes Ricinusöl; Polyolestern; Anlagerungsprodukten von 2 bis 15 Mol Ethylenoxid an Ricinusöl und/oder gehärtetes Ricinusöl; Partialestern auf Basis linearer, verzweigter, ungesättigter bzw. gesättigter C_{6/22}-Fettsäuren, Ricinolsäure sowie 12-Hydroxystearinsäure und Glycerin, Polyglycerin, Pentaerythrit, Dipentaerythrit, Zuckeralkoholen; Alkylglucosiden; Trialkylphosphaten sowie Mono-, Di- und/oder Tri-PEG-alkylphosphaten; Wollwachsalkoholen; Polysiloxan-Polyalkyl-Polyether-Copolymeren bzw. entsprechenden Derivaten; Mischestem aus Pentaerythrit, Fettsäuren, Citronensäure und Fettalkohol und/oder Mischestem von Fettsäuren mit 6 bis 22 Kohlenstoffatomen, Methylglucose und Polyolen; Polyalkylenglycolen sowie Glycerincarbonat.

5. PIT-Emulsionen nach mindestens einem der Ansprüche 1 bis 4, **dadurch gekennzeichnet, daß** sie als Komponente (b) Mischungen von Fettalkoholethoxylaten und Fettsäurepartialglyceriden enthalten.

6. PIT-Emulsionen nach einem der Ansprüche 1 bis 5, **dadurch gekennzeichnet, daß** sie als Komponente (c) Mineralöl, Fettsäureniedrigalkylester und/oder pflanzliche Triglyceride enthalten.

7. PIT-Emulsionen nach einem der Ansprüche 1 bis 6, **dadurch gekennzeichnet, daß** sie Tröpfchengrößen im Bereich von 0,01 bis 1 µm aufweisen.

## Claims

1. PIT emulsions containing
(a) 1 to 20% by weight of pesticides,
(b) 5 to 15% by weight of nonionic emulsifiers and
(c) 0 to 40% by weight of solvents,
with the proviso that the quantities shown add up to 100% by weight with water.

2. PIT emulsions as claimed in claim 1, **characterized in that** they contain oil-soluble pesticides as component (a).

3. PIT emulsions as claimed in claims 1 and/or 2, **characterized in that** they contain fungicides, herbicides, insecticides or mixtures thereof as component (a).

4. PIT emulsions as claimed in at least one of claims 1 to 3, **characterized in that** they contain as component (b) nonionic emulsifiers selected from the group consisting of products of the addition of 2 to 30 mol ethylene oxide and/or 0 to 5 mol propylene oxide onto linear fatty alcohols containing 8 to 22 carbon atoms, onto fatty acids containing 12 to 22 carbon atoms and onto alkylphenols containing 8 to 15 carbon atoms in the alkyl group; C_{12/18} fatty acid monoesters and diesters of products of the addition of 1 to 30 mol ethylene oxide onto glycerol; glycerol monoesters and diesters and sorbitan monoesters and diesters of saturated and unsaturated fatty acids containing 6 to 22 carbon atoms and ethylene oxide adducts thereof; alkyl mono- and oligoglycosides containing 8 to 22 carbon atoms in the alkyl group and ethoxylated analogs thereof; products of the addition of 15 to 60 mol ethylene oxide onto castor oil and/or hydrogenated castor oil; polyol esters; products of the addition of 2 to 15 mol ethylene oxide onto castor oil and/or hydrogenated castor oil; partial esters based on linear, branched, unsaturated or saturated C_{6/22} fatty acids, ricinoleic acid and 12-hydroxystearic acid and glycerol, polyglycerol, pentaerythritol, dipentaerythritol, sugar alcohols, alkyl glucosides; trialkyl phosphates and mono-, di- and/or tri-PEG-alkyl phosphates; wool wax alcohols; polysiloxane/polyalkyl polyether copolymers and corresponding derivatives; mixed esters of pentaerythritol, fatty acids, citric acid and fatty alcohol and/or mixed esters of fatty acids containing 6 to 22 carbon atoms, methyl glucose and polyols; polyalkylene glycols and glycerol carbonate.

5. PIT emulsions as claimed in at least one of claims 1 to 4, **characterized in that** they contain mixtures of fatty alcohol ethoxylates and fatty acid partial glycerides as component (b).

6. PIT emulsions as claimed in at least one of claims 1 to 5, **characterized in that** they contain mineral oil, fatty acid lower alkyl esters and/or vegetable triglycerides as component (c).

7. PIT emulsions as claimed in at least one of claims 1 to 6, **characterized in that** they have droplet sizes of 0.01 to1 µm.

## Revendications

1. Emulsions PIT contenant
(a) 1 à 20 % en poids de pesticides,
(b) 5 à 15 % en poids d'émulsifiants non ioniques et
(c) 0 à 40 % en poids de solvant
étant entendu que les données quantitatives sont complétées à 100 % en poids avec de l'eau.

2. Emulsions PIT selon la revendication 1,
**caractérisées en ce qu'**
elles contiennent comme composant (a) des pesticides solubles dans l'huile.

3. Emulsions PIT selon les revendications 1 et/ou 2,
**caractérisées en ce qu'**
elles contiennent comme composant (a) des fongicides, herbicides, insecticides ou leurs mélanges.

4. Emulsions PIT selon au moins l'une des revendications 1 à 3,
**caractérisées en ce qu'**
elles contiennent comme composant (b) des émulsifiants non ioniques qui sont choisis dans le groupe comprenant les produits d'addition par fixation de 2 à 30 moles d'oxyde d'éthylène et/ou 0 à 5 moles d'oxyde de propylène sur des alcools gras linéaires ayant 8 à 22 atomes de C, sur des acides gras ayant 12 à 22 atomes de C et sur des alkylphénols ayant 8 à 15 atomes de C dans le groupe alkyle, les mono-et diesters d'acides gras en C_{12/18} de produits d'addition par fixation de 1 à 30 moles d'oxyde d'éthylène sur de la glycérine, les mono-et diesters de glycérine et le mono-et diester de sorbitane d'acides gras saturés et insaturés ayant 6 à 22 atomes de carbone et leurs produits d'addition par fixation sur de l'oxyde d'éthylène, les monoglucosides et oligoglucosides d'alkyle ayant 8 à 22 atomes de carbone dans le reste alkyle et leurs analogues éthoxylés, les produits d'addition par fixation de 15 à 60 moles d'oxyde d'éthylène sur de l'huile de ricin et/ou de l'huile de ricin durcie, les polyesters, les produits d'addition par fixation de 2 à 15 moles d'oxyde d'éthylène sur de l'huile de ricin et/ou de l'huile de ricin durcie, les esters partiels à base d'acides gras en C_{6/22} linéaires, ramifiés, insaturés ou saturés, d'acide ricinoléïque ainsi que d'acide 12-hydroxystéarique et de glycérine, polyglycérine, pentaérythrite, dipentaérythrite, les polyols, les glucosides d'alkyle, les trialkylphosphates ainsi que les mono, di et/ou tri-PEG-alkylphosphates, les alcools de cire de laine, les copolymères polysiloxane-polyalkyle-polyéther et leurs dérivés adéquats, les esters mixtes de pentaérythrite, d'acides gras, d'acide citrique et d'alcool gras et/ou les esters mixtes d'acides gras ayant 6 à 22 atomes de carbone, de méthylglucose et de polyols, les polyalkylèneglycols ainsi que le carbonate de glycérine.

5. Emulsions PIT selon au moins l'une des revendications 1 à 4,
**caractérisées en ce qu'**
elles contiennent comme composant (b) des mélanges d'éthoxylates d'alcools gras et de glycérides partiels d'acides gras.

6. Emulsions PIT selon l'une des revendications 1 à 5,
**caractérisées en ce qu'**
elles contiennent comme composant (c) de l'huile minérale, des esters faiblement alkylés d'acides gras et/ou des triglycérides végétaux.

7. Emulsions PIT selon l'une des revendications 1 à 6,
**caractérisées en ce qu'**
elles présentent des dimensions de gouttelettes dans la gamme de 0,01 à 1 µm.
